# EUROPÄISCHE PATENTSCHRIFT

(11) **EP 4 091 050 B1**
(45) Veröffentlichungstag und Bekanntmachung des Hinweises auf die Patenterteilung: **15.11.2023**
(21) Anmeldenummer: 21711748.0
(22) Anmeldetag: 25.02.2021
(51) Int. Cl.: G06F 9/455

(54) **VERFAHREN UND ANORDNUNG ZUM VERWALTEN VON AUTOMATISIERUNGS-PROGRAMMEN FÜR INDUSTRIELLE AUTOMATISIERUNGSPLATTFORMEN**
METHOD AND ASSEMBLY FOR MANAGING AUTOMATION PROGRAMS FOR INDUSTRIAL AUTOMATION PLATFORMS
PROCÉDÉ ET AGENCEMENT DE GESTION DES PROGRAMMES D'AUTOMATISATION POUR PLATEFORMES D'AUTOMATISATION INDUSTRIELLES

(30) Priorität: 20.03.2020 EP 20164384
(43) Veröffentlichungstag der Anmeldung: 23.11.2022
(73) Patentinhaber: Siemens Aktiengesellschaft, 80333 München (DE)
(72) Erfinder: GÖTZ, Jan, 91054 Buckenhof (DE); MITTERMEIER, Ludwig Andreas, 81541 München (DE); MÜLLER, Harald, 82229 Seefeld-Hechendorf (DE); PREMNADH, Sreenath, 82216 Maisach (DE)
(74) Vertreter: Siemens Patent Attorneys
(86) Internationale Anmeldenummer: PCT/EP2021/054633
(87) Internationale Veröffentlichungsnummer: WO 2021/185547

(56) Entgegenhaltungen:
- GOETHALS TOM ET AL: "FLEDGE: Kubernetes Compatible Container Orchestration on Low-Resource Edge Devices", 12TH EUROPEAN CONFERENCE ON COMPUTER VISION, ECCV 2012; [LECTURE NOTES IN COMPUTER SCIENCE], Bd. 16, Nr. 484262, 19. Januar 2020 (2020-01-19), Seiten 174-189, XP047552235, ISSN: 0302-9743 ISBN: 978-3-642-36741-0
- THOMAS GOLDSCHMIDT ET AL: "Container-based architecture for flexible industrial control applications", JOURNAL OF SYSTEMS ARCHITECTURE, Bd. 84, 6. März 2018 (2018-03-06), Seiten 28-36, XP055516260, NL ISSN: 1383-7621, DOI: 10.1016/j.sysarc.2018.03.002

## Beschreibung

Die Erfindung betrifft ein Verfahren zum Verwalten von Automatisierungsanwendungen für industrielle Automatisierungsplattformen gemäß dem Oberbegriff des Patentanspruchs 1, und eine Anordnung zum Verwalten von Automatisierungsanwendungen für industrielle Automatisierungsplattformen gemäß dem Oberbegriff des Patentanspruchs 10.

Automatisierungsanwendungen in Automatisierungssystemen bestehen aus einem oder mehreren Automatisierungsprogrammen, beispielsweise gemäß der Norm IEC 61131, die auf industriellen Automatisierungsplattformen ablaufen. Solche industrielle Automatisierungsplattformen können beispielsweise Speicherprogrammierbare Steuerungen (kurz SPS oder "PLC" - Programmable Logic Controller) sein. Das Erstellen und Verwalten dieser Automatisierungsprogramme, beispielsweise die Zuweisungen der Programme zu einzelnen Steuerungen, das Laden/Starten/Stoppen der Programme, die Aktualisierung von Programmen etc. erfolgt typischerweise in sogenannten Engineeringsystemen, beispielsweise dem TIA-Portal der Siemens AG. Diese Aktivitäten werden übergreifend als Engineering bezeichnet und erfolgen in aller Regel manuell gesteuert, d.h. mit einem niedrigen Automatisierungsgrad und entsprechend langen Änderungszeiten und hohem Änderungsaufwand. Außerdem muss das Engineeringsystem in der Regel auch örtlich mit der industriellen Automatisierungsplattform verbunden werden, es müssen die Versionen des Engineeringsystems mit den jeweiligen Versionen und Typen der verwendeten Automatisierungsplattformen (Steuerungen) zusammenpassen etc.

Im Folgenden sollen zumindest die Vorgänge des Übertragens eines bereits erstellten Automatisierungsprogramms zu dem Ziel oder "Target", also der industriellen Automatisierungsplattform (SPS, PLC o.ä.), die Initiierung und Beendigung des Ablaufs des Automatisierungsprogramms (Start/Stop), das Empfangen und Weiterleiten von Quittierungsmeldungen der industriellen Automatisierungsplattform im Zuge der Abarbeitung des Automatisierungsprogramms zu einer Kontrollinstanz (z.B. HMI-Gerät; HMI = Human Machine Interface) zusammengefasst als "Verwalten" und "Kontrolle" des Automatisierungsprogramms bezeichnet werden.

Für modulare, IT-basierte Systeme, also Systeme aus der konventionellen Computertechnik, hält bereits seit einiger Zeit die Technologie von Software-Containern Einzug. Insbesondere in verteilten Systemen mit mehreren Rechenknoten werden die Container-basierten Programme mittels sogenannter Container-Orchestration-Techniken, beispielsweise Kubernetes (https://kubernetes.io/de/), auf die Rechenknoten verteilt, zum Ablauf gebracht und überwacht. Bei Kubernetes erfolgt dies über eine zentrale Komponente, den sogenannten Master oder Kubernetes Master. Dieser erhält Beschreibungen der Software-Komponenten, die ablaufen sollen, das sogenannte Manifest. Der Master wählt geeignete Knoten (Nodes) aus und bringt den Container mit den Software-Komponenten dort zum Ablauf, was als "Deployment" bezeichnet wird. Ferner überwacht der Kubernetes Master die Komponenten und führt bei Bedarf Aktionen zur Wiederherstellung durch. Ferner können zur Laufzeit Änderungen der Komponenten erfolgen, beispielsweise das Starten von aktualisierten Versionen, Skalierung (Starten/Stoppen von Instanzen zur Erhöhung/Erniedrigung des Durchsatzes) etc.

Wesentlich für die Verwendung von Kubernetes ist, dass die komplette Software in ein oder mehrere Software-Container (z.B. Docker-Container - https://www.docker.com/resources/what-container) zusammengefasst ist, wobei diese Container in eine Laufzeitumgebung, eine sogenannte Container-Runtime, auf einer Computer-Hardware (üblicherweise "Node" genannt) übertragen wird. Bestandteil eines "Node" ist dabei ein sogenanntes Kubelet, das ist eine lokal ausgeführte Software, die mit dem verwaltenden Kubernetes Master und der lokalen Container-Runtime zusammenspielt, um den Container mit der Software lokal herunterzuladen, zur Ausführung zu bringen und den Betrieb zu überwachen.

Wie bereits erwähnt, erfolgt bisher das Verwalten (Erstellen, Laden, Starten, Stoppen) von Automatisierungsprogrammen üblicherweise weitgehend manuell mit Hilfe von speziellen Engineering Systemen, die lokal mit der industriellen Automatisierungsplattform (Industriesteuerung, SPS, PLC oder dgl.) verbunden werden. Üblicherweise erfolgt die Zuweisung von Automatisierungsprogrammen zu den einzelnen Automatisierungsplattformen (z.B. SPS - speicherprogrammierbare Steuerungen) manuell.

Überdies ist die Verwendung der klassischen Engineeringsysteme meist daran gebunden, dass eine Instanz dieser Engineeringsysteme lokal in einem industriellen Netzwerk vorhanden ist; eine "Fernsteuerung", insbesondere in einem Cloudbasierten Ansatz, erfordert einen dedizierten Zugriff eines entfernten Arbeitsplatzes auf das lokale Engineeringsystem, was eine aufwendige Konfiguration des Gesamtsystems erfordert.

Die Veröffentlichung Goethals et al. " FLEDGE: Kubernetes Compatible Container Orchestration on Low-Resource Edge Devices" (ISBN: 978-3-642-36741-0) zeigt die Verwendung von virtuellen Kubelets zur "Orchestrierung", also Verteilung und Betrieb von Containern mit Software auf Geräten mit limitierten Ressourcen.

Die Publikation Goldschmidt et al. " Container-based architecture for flexible industrial control applications" (Journal of Systems Architecture Bd. 84 (2018) Seiten 28-36) offenbart die Emulierung proprietärer PLC-Hardware in einem Container zur Ausführung von proprietären Steuerungsprogrammen.

Es ist daher eine Aufgabe der vorliegenden Erfindung, klassische Automatisierungsprogramme mit einem höheren Automatisierungsgrad zu verwalten und zu kontrollieren, dabei möglichst gängige, verbreitete und leicht erlernbare Verfahren einzusetzen und die Abhängigkeiten von Engineeringsystemen zu den verwalteten industriellen Automatisierungsplattformen zu reduzieren und die örtliche Abhängigkeit von den Engineeringsystemen zu mindern oder aufzuheben.

Die Aufgabe der Erfindung wird prinzipiell gelöst durch ein an sich bekanntes System aus Kubernetes Master und Kubelets, wobei solche bekannten Systeme zur Verwaltung und Kontrolle von Container basierten Programmen in Container-Laufzeitumgebungen gedacht sind. Erfindungsgemäß sollen Virtual Kubelets (siehe https://github.com/virtual-kubelet) eingesetzt werden, die sich gegenüber dem Kubernetes Master wie ein "echtes" Kubelet verhalten, jedoch mit einem speziellen Provider-Interface (siehe https://virtual-kubelet.ic/docs/providers/#provider-interface) ausgestattet sind, welches erfindungsgemäß zur Verwaltung und zur Kontrolle von Automatisierungsprogrammen für industrielle Automatisierungsplattformen, insbesondere speicherprogrammierbare Steuerungen, eingerichtet sind. Virtual Kubelets oder virtuelle Kubelets sind prinzipiell bekannt, und dienen klassischer Weise dazu, Software-Container auf nahezu jede Plattform zu bringen, die eine Container-Laufzeitumgebung bereitstellen kann, insbesondere emulierte Container-Laufzeitumgebungen im Cloud-Umfeld, also bei Cloud-Dienstbetreibern wie AWS (Amazon Web Service) und dergleichen.

Erfindungsgemäß soll jedoch ein Provider-Interface oder Provider-Plug-In für die Virtual Kubelets bereitgestellt werden, welches statt der Container Automatisierungsprogramme verwaltet, wobei Automatisierungsprogramme in einer speziellen Art und Weise verwaltet und zu industriellen Automatisierungsplattform übertragen und dort gestartet, gestoppt etc. werden müssen. Dies bedeutet, dass erfindungsgemäß zumindest diejenigen Funktionalitäten klassischer industrieller Engineering-systeme, die mit dem "Deployment" (Software-Verteilung) und der Kontrolle der auszuführenden Software auf Automatisierungsplattformen eingerichtet sind, mittels des Provider-Interface bereitgestellt werden müssen. Dabei kann das derart ausgestaltete Virtual Kubelet in der Domäne der industriellen Automatisierungsanordnung ablaufen, also beispielsweise auf entsprechend ausgerüsteten speicherprogrammierbaren Steuerungen oder allgemein Automatisierungsplattformen selbst, praktischerweise jedoch auch auf separaten Servern, insbesondere auf einem industriellen Edge-Gerät oder Edge-Device. Alternativ ist ein Ablauf außerhalb der industriellen Domäne denkbar, wobei dann das Provider-Interface einen datentechnischen Zugriff auf die Automatisierungsplattform benötigt, beispielsweise mittels eines VPN-Zugangs.

Die Aufgabe wird insbesondere durch das Verfahren gemäß dem Patentanspruch 1 und durch die Anordnung gemäß Patentanspruch 10 gelöst.

Dabei ist ein Verfahren zum Verwalten eines Automatisierungsprogramms für eine industrielle Automatisierungsplattform vorgesehen, wobei das Automatisierungsprogramm zu der der Automatisierungsplattform übertragen und die Ausführung des Automatisierungsprogramms auf der Automatisierungsplattform kontrolliert wird. Dabei wird in einem ersten Schritt das Automatisierungsprogramm oder eine Referenz zu diesem Automatisierungsprogramm von einem Kubernetes Master zu einem Virtual Kubelet übertragen, wobei in einem zweiten Schritt durch ein Provider-Interface des Virtual Kubelets das übertragene oder referenzierte Automatisierungsprogramm zu der industriellen Automatisierungsplattform übertragen wird, und wobei in einem dritten Schritt die Ausführung des übertragenen Automatisierungsprogramms auf der industriellen Automatisierungsplattform kontrolliert wird, wobei durch das Provider-Interface Steuerungsbefehle zu der industriellen Automatisierungsplattform übertragen und Quittierungsmeldungen der industriellen Automatisierungsplattform empfangen und verarbeitet oder zu einer Kontrollinstanz, insbesondere dem Kubernetes Master oder einem Bedien- und Beobachtungsgerät (HMI-Gerät), weitergeleitet werden. Durch dieses Verfahren ist es möglich, Automatisierungsprogramme mit den Mitteln von Container-Orchestrierungssystemen zu verwalten, zu verteilen und ablaufen zu lassen.

Die Aufgabe wird außerdem durch eine Anordnung zum Verwalten eines Automatisierungsprogramms für eine industrielle Automatisierungsplattform gelöst, mit einem Kubernetes Master zur Übertragung des Automatisierungsprogramms oder einer Referenz zu dem Automatisierungsprogramm an ein Virtual Kubelet, mit dem Virtual Kubelet zum Empfang des Automatisierungsprogramms oder der Referenz zu dem Automatisierungsprogramm und zum Empfang von Anweisungen für die Installation des Automatisierungsprogramms auf der Automatisierungsplattform und zur Kontrolle des Ablaufs des Automatisierungsprogramms auf der Automatisierungsplattform, und mit einem Provider-Interface des Virtual Kubelet zur Übertragung des Automatisierungsprogramms zu der Automatisierungsplattform, zur Kontrolle des Programmablaufs des Automatisierungsprogramms und zur Entgegennahme und Weiterleitung von Quittierungsmeldungen der Automatisierungsplattform im Zuge des Ablaufs des Automatisierungsprogramms. Durch diese Anordnung können die bereits an Hand des Verfahrens erläuterten Vorteile erzielt werden.

Vorteilhafte Ausgestaltungen des erfindungsgemäßen Verfahrens sind in den abhängigen Patentansprüchen angegeben. Die dabei beschriebenen Merkmale und deren Vorteile gelten sinngemäß auch für die erfindungsgemäße Anordnung. Vorteilhafte Ausgestaltungen können sowohl einzeln, als auch in sinnfälliger Kombination miteinander realisiert werden.

Obwohl es mit einem entsprechend ausgestalteten Kubernetes Master und dem entsprechend ausgestalteten Gegenstück, dem Virtual Kubelet, prinzipiell möglich ist, ein Automatisierungsprogramm oder dessen Source Code direkt bereit zu stellen, wird praktischerweise durch den Kubernetes Master eine Referenz zu dem Automatisierungsprogramm übermittelt. Die Referenz kann jeder geeignete Verweis oder "Link" zu einem Speicherort sein, von dem das Virtual Kubelet bzw. dessen Provider-Interface das Automatisierungsprogramm oder dessen Source-Code laden kann, insbesondere eine URL, eine Speicher-Pfadinformation, eine Internet-Adresse, eine FTP-Adresse oder dergleichen.

In einer vorteilhaften Ausgestaltung wird das übertragene oder referenzierte Automatisierungsprogramm vor der Übertragung an die Automatisierungsplattform vorverarbeitet. Dies ermöglicht es insbesondere, unterschiedliche Automatisierungsplattformen mit unterschiedlichen Eigenschaften zu adressieren. So kann beispielsweise das Automatisierungsprogramm für die jeweilige Ziel-Hardware passend kompiliert werden und es kann berücksichtigt werden, dass unterschiedliche Automatisierungsplattformen auch in unterschiedlicher Art adressiert und programmiert werden. Insbesondere kann in einer vorteilhaften Ausgestaltung das Provider-Interface das endgültige Automatisierungsprogramm aus einer Vielzahl von Quellen "zusammenbauen", also beispielsweise referenzierte Objekte oder Bibliotheken einbinden, das Programm zusammen kompilieren, Aktualisierungen einzelner Elemente neu laden und dergleichen.

In einer vorteilhaften Variante kann ein Provider-Interface oder ein entsprechend erweitertes Virtual Kubelet mit einem integrierten Provider Interface (Provider-Interface-Plug-In) eine Mehrzahl von Automatisierungsplattformen unterschiedlichen Typs mit Automatisierungsprogrammen versorgen und deren Ablauf kontrollieren. Es ist aber in anderen vorteilhaften Varianten auch möglich, für unterschiedliche Typen oder Typreihen von Automatisierungsplattformen verschiedene, spezialisierte Provider-Interfaces anzubieten und damit dann auch verschiedene Virtual Kubelets auszurüsten oder alternativ mehrere verschiedene spezialisierte Provider-Interface-Plug-Ins in ein gemeinsames Virtual Kubelet zu integrieren. Durch diese Flexibilität sind die entsprechenden Systeme nicht nur breit einsetzbar, sondern auch fast beliebig skalierbar.

Die spezialisierten Provider-Interfaces, also die Plug-Ins zur Erweiterung der Virtual Kubelets, enthalten vorteilhafterweise viele Funktionen, die den Funktionen der klassischen Engineering-Systeme für industrielle Automatisierungsplattformen entsprechen oder gar diesen entnommen sind. In einer besonders vorteilhaften Variante adressiert das Provider-Interface eine Programmierschnittstelle, ein sogenanntes API (Application Programming Interface), eines tatsächlich vorhandenen Engineeringsystems, um deren Funktionalitäten zu nutzen (beispielsweise das kompilieren von Software) oder gar die Automatisierungsprogramme lokal in einem Automatisierungsnetzwerk zu verteilen und zu kontrollieren.

In einer vorteilhaften Variante werden zur Verwaltung von Ressourcen der Automatisierungsplattform und/oder zur Zuweisung des Automatisierungsprogramms zu mehreren Automatisierungsplattformen Custom Resource Definitions (CRD) (siehe: https://kubernetes.io/docs/concepts/extend-kubernetes/apiextension/custom-resources/) in Kubernetes verwendet. Damit können die Besonderheiten von Automatisierungsplattformen, die im Vergleich zur Verwendung von container-basierten Plattformen zu beachten sind, datentechnisch festgelegt und automatisch berücksichtigt werden.

Vorteilhaft ist es auch möglich, einen sog. Custom Scheduler (siehe: https://kubernetes.io/docs/concepts/scheduling/kubescheduler/), also einen auf das für die Verwendung von Automatisierungsplattformen angepassten Scheduler, für das Deployment (Verteilung) der Automatisierungsprogramme auf ihre Ziele zu verwenden. Mit Kubernetes kann man bei jedem "Pod" einen Scheduler angeben, mit dem dieser Pod bearbeitet wird. Wird für die PLC-Programme ein eigener, also spezifisch auf die Erfordernisse der Automatisierungsplattformen, angepasster Scheduler verwendet, kann man Folgendes erreichen: Zum einen können PLC-Programme leicht von sonstigen Pods unterschieden werden. Damit kann eine Zuordnung von PLC-Programmen zu passenden PLC-Knoten erfolgen. Zum anderen können Besonderheiten beim Schedulen von PLC-Programmen im Custom Scheduler berücksichtigt werden, insbesondere kann berücksichtigt werden, dass Automatisierungsplattformen oft nicht durch "Download" eines Pakets im Sinne eines Containers befüllt werden, sondern in mehrschrittigen Abläufen.

In einer Ausführungsvariante werden Quality of Service Parameter (QoS-Parameter) verwendet, um ein PLC-Programm einem passenden PLC-Knoten bzw. einer geeigneten Automatisierungsplattform zuzuweisen. Beispiele für QoS-Parameter sind Rechenkapazität, Latenzzeiten, Zykluszeit, Verfügbarkeit, Privacy/ Security und dgl. Damit ist eine selbständige, also automatische und vor allem funktionssichere Lastverteilung möglich.

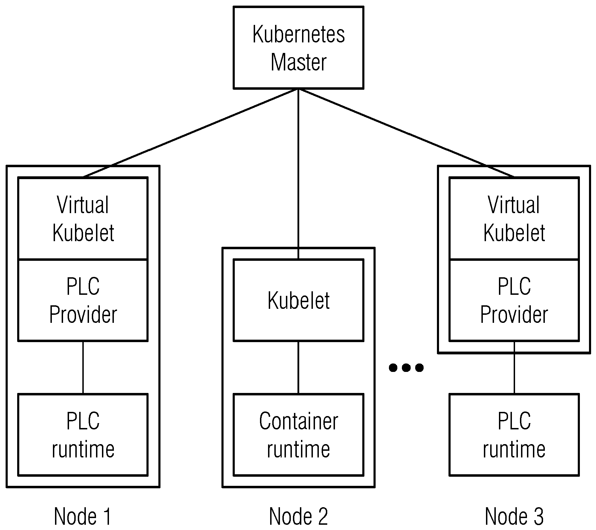

Ein Ausführungsbeispiel des erfindungsgemäßen Verfahrens wird nachfolgend anhand der Zeichnung erläutert. Das Ausführungsbeispiel dient gleichzeitig der Erläuterung einer erfindungsgemäßen Anordnung.

Dabei zeigt die einzige Figur in schematischer Darstellung einen Kubernetes Master, der drei unterschiedliche Knoten mit unterschiedlich gearteten Programmen versieht und kontrolliert.

In der Figur ist die Verteilung von Software auf drei verschiedene Rechenknoten Node 1, Node 2, Node 3 (Knoten; Node; Ziel-Hardware, "Target"), gezeigt. Dieser Vorgang wird durch eine zentrale Verwaltungseinrichtung, den Kubernetes Master, gesteuert. Bei dieser Anwendung (in der Figur mit "Kubernetes" beschriftet) erfolgt die lokale Steuerung dieser Vorgänge auf den Rechenknoten Node 1, Node 2, Node 3 (Knoten; Node), also der Ziel-Hardware für auszuführende Programme, durch einen Agenten, der auf jedem Knoten vorhanden ist (sog. Kubelet) .

In der Figur wird lokal auf dem Knoten Node 2 ein klassisches Kubelet ausgeführt, das zur Verwaltung von Software-Containern eingerichtet ist. Das Kubelet kann dabei Software-Container, die mittels einer Anweisung ("Manifest") des Kubernetes Master spezifiziert sind, in einer lokalen Ausführungsumgebung "Container Runtime" zur Ausführung bringen. Die Software-Container werden nach Anweisung des Kubelet aus einer spezifizierten Quelle geladen.

Das Kubelet eines Knotens erhält dazu vom Master, beispielsweise mit dem Manifest oder später, entsprechende Instruktionen zum Starten, Stoppen, Ändern der auf dem Knoten laufenden Software-Komponenten. Das sind üblicherweise bei Kubernetes Software-Container bzw. eine Gruppierung von Software Containern (sog. Pods). Die Schnittstelle zwischen Kubernetes Master und Kubelet ist festgelegt. Das Kubelet besitzt eine definierte Schnittstelle zur Ausführungsumgebung ("Container Runtime") auf dem Knoten ("Node"), um die Software-Container starten und manipulieren zu können.

Eine Erweiterung von Kubernetes führt sog. Virtual Kubelets ein; diese sind in der Figur anhand der Knoten Node 1, Node 3 gezeigt. Virtual Kubelets dienen klassischer Weise dazu, Software-Container in einer nicht kompatiblen Containerumgebung zu verwalten (z.B. Windows Container für Computer mit dem Betriebssystem Microsoft Windows). Das Prinzip eines Virtual Kubelet ist, dass sein Interface zum Kubernetes Master wie das eines herkömmlichen Kubelets ausgestaltet ist. Es besitzt also "nach oben" die gleiche Schnittstelle wie ein klassisches Kubelet, und der Master kommuniziert in Gegenrichtung wie mit einem klassischen Kubernetes Node, also einem Knoten, der Container (bzw. Pods) verwalten kann - siehe das Beispiel mit dem Knoten Node 2. Nach "unten", also in der Kommunikation mit dem "Target", kann ein Virtual Kubelet im Prinzip eine beliebige Schnittstelle besitzen. In der aktuellen Implementierung (https://github.com/virtualkubeletVirtual Kubelet/) wird dies durch sog. Provider gelöst. Klassischer Weise dienen diese Provider entweder dazu, größere Einheiten (Cluster bzw. Serverless Container Umgebungen wie Fargate) wie einen einzigen Knoten erscheinen zu lassen, oder Inkompatibilitäten zu beheben (z.B. für Microsoft Azure Container).

In der dargestellten erfindungsgemäßen Lösung der Knoten Node 1, Node 3 wird ein Virtual Kubelet für das Management eines Automatisierungsprogramms bzw. von Teilen eines Automatisierungsprogramms verwendet. Dazu ist ein spezieller PLC-Provider implementiert, der das Automatisierungsprogramm auf der entsprechenden Automatisierungsplattform (im Folgenden und der Figur als "PLC Runtime" bezeichnet) starten, stoppen, überwachen, etc. kann. Die Grundfunktionen, die der Provider erfüllen muss, sind in https://github.com/virtualkubelet/virtual-kubelet beschrieben.

Im vorliegenden Ausführungsbeispiel ist dieser spezielle Provider jeweils als ein Plug-In für das Virtual Kubelet realisiert; andere Implementierungen können eine separate Komponente dafür vorsehen. Das Plug-In, also hier der "PLC Provider", kann selbst modular aufgebaut sein, insbesondere eine generische Komponente zur Anbindung an das hostende Virtual Kubelet aufweisen, andererseits ein spezifisches Modul zur Verwaltung eines jeweiligen speziellen Typs einer Automatisierungsplattform aufweisen.

Konkret kommuniziert das Provider-Plug-In PLC Provider dabei mit der Ausführungsumgebung für Automatisierungsprogramme der adressierten Automatisierungsplattform, der sog. PLC Runtime. Dabei ist anhand des Knotens Node 1 der Fall dargestellt, in dem das Virtual Kubelet mit dem PLC Provider auf der zu verwaltenden Automatisierungsplattform (Node 1) selbst installiert ist. Das Virtual Kubelet und der PLC Provider können dabei Bestandteil der Firmware sein oder als separates Programm installiert sein. Dagegen ist anhand des Knotens Node 3 der Fall gegeben, in dem das Virtual Kubelet und der PLC Provider auf einer separaten Maschine ablaufen, beispielsweise einem Industriellen Edge-Gerät, welches sowohl eine Schnittstelle zur industriellen Ebenen mit der Automatisierungsplattform Node 3, als auch eine weitere Schnittstelle zu dem Kubernetes Master aufweist, wobei letzterer auch auf einem Server eines Cloud-Anbieters ablaufen kann.

Zur Vorbereitung der Programmierung wird ein Automatisierungsprogramm für eine Automatisierungsplattform (PLC) z.B. innerhalb eines Projekts eines industriellen Engineeringsystems (z.B. TIA-Portal Projekt) erzeugt, auf einen "Pod" abgebildet und in einer referenzierbaren Quelle gespeichert. Die Automatisierungsplattform (PLC oder virtuelle PLC) selbst wurde konfiguriert und netzwerktechnisch so eingerichtet, dass sie verwendet werden kann. Eine virtuelle PLC ist dabei eine rein Software-basierte PLC-Instanz, die in einer virtuellen Maschine ausgeführt wird. Funktionalität und logische Schnittstellen der virtuellen PLC entsprechen einer realen PLC. Eine Abbildung einiger Grundfunktionen des PLC-Providers zur Verwaltung der Automatisierungsplattformen Node 1, Node 3 wäre dann folgendermaßen möglich:
- CreatePod -> Lade ein Automatisierungsprogramm auf eine vorhandene PLC oder virtuelle PLC-Instanz und starte es. Dabei werden entsprechende Ressourcen der PLC/ PLC-Instanz belegt und als belegt gekennzeichnet
- UpdatePod -> Nehme Veränderungen eines laufenden Automatisierungsprogramms auf einer PLC / virtuellen PLC-Instanz vor. Veränderungen können sich auf den Softwarestand und/oder die Konfiguration bzw. Ausführungsparameter des Automatisierungsprogramms beziehen.
- DeletePod -> Stoppe ein laufendes Automatisierungsprogramm und gebe die belegten Ressourcen auf der PLC/ virtuellen PLC-Instanz frei.
- GetContainerLogs -> Weiterleitung des Diagnosepuffers bzw. des das entsprechende Automatisierungsprogramm betreffenden Teils des Diagnosepuffers der PLC
- GetPodStatus -> Zeige aktuelle Ausführungsdetails zum betreffenden Automatisierungsprogramm, wie beispielsweise Zykluszeiten, Speicherbedarf, Diagnosestatus, Display-Inhalte
- NodeConditions -> Zeige abstrahierten Zustand der PLC / virtuellen PLC-Instanz (ready, stopped, starting, out of memory)
- OperatingSystem -> Zeige Version der PLC an

In dieser Abbildung könnten vorhandene Engineering-Tools (z.B. TIA-Portal, Step 7) vollständig im PLC-Provider genutzt werden. Modulare Komponenten sind allerdings von Vorteil, um den PLC Provider schlank zu halten und auch auf Knoten mit geringer Rechenkapazität ablaufen lassen zu können. Es können also beispielsweise die zuvor genannten Grundfunktionen als Module oder Plug-Ins im PLC-Provider vorgesehen werden. Es ist auch möglich, diese Grundfunktionen zumindest teilweise durch Aufruf entsprechender Dienste in einer Cloud oder in einem anderweitig ablaufenden Engineeringsystem zu realisieren.

Der PLC-Provider hat also ein Arbeitsverfahren implementiert, um beim Starten eines Pods die dazu vorgesehenen bzw. referenzierten PLC-Programme laden und an die PLC-Runtime übergeben zu können. Dies kann von der referenzierten Quelle (Repository) oder über andere Quellen oder Verzeichnisse erfolgen; alternativ ist es möglich, die Kubernetes-Komponenten (Kubernetes Master, Virtual Kubelet) so zu verändern, dass zumindest teilweise die PLC-Programme selbst gehandhabt werden. Zusätzlich können von dem PLC Provider oder einem von diesem adressierten Dienst auch Änderungen an dem Automatisierungsprogramm vorgenommen werden, insbesondere eine plattformspezifische Anpassung oder Kompilierung des Programmcodes je nach Typ und derzeitigem Zustand (Status, beispielsweise freier Speicherplatz, Version der Firmware o.ä.) der PLC Runtime, also der Ausführungsumgebung oder der Automatisierungsplattform als solche.

Insbesondere in Mischsystemen (verschiedene PLC-Typen, PLCs gemischt mit Software-Containersystemen, Standard-PCs, Container-Runtimes in der Cloud) muss eine Unterscheidung / Kennzeichnung des spezifischen Typs der Runtime ermöglicht werden. Dies kann beispielsweise über Labels in Kubernetes erfolgen. Es ist auch möglich, dass der PLC Provider den Typ der Ausführungsumgebung und andere Parameter selbst ermittelt und die entsprechenden Anpassungen des Automatisierungsprogramms und der Adressierung oder allgemein des Datenaustauschs mit der Ausführungsumgebung vornimmt.

Der PLC-Provider kann in Automatisierungsplattformen (PLCs) integriert werden, dies ist insbesondere bei neuartigen Automatisierungsplattformen bereits bei Auslieferung leicht möglich durch eine Vorinstallation mit oder als Bestandteil der Firmware. Wie erwähnt ist das am Beispiel des Knotens Node 1 zu sehen. Bei bestehenden Systemen kann der PLC-Provider auch auf bestehenden Rechenknoten oder alternativ auf zusätzlichen Knoten gestartet werden, um sich über das Netzwerk mit der Automatisierungsplattform / PLC und der dortigen Ausführungsumgebung zu verbinden. Hierbei ist es z.B. möglich, Edge-Devices (industrielle Edge-Geräte) oder Cloud-Knoten als Plattform für den PLC-Provider bzw. das entsprechend ausgestaltete Virtual Kubelet zu verwenden, siehe in der Figur den Knoten Node 3.

Während vorstehend der Weg der Software-Verteilung, also des "Deployments" eines Pods mit zumindest einem Automatisierungsprogramm, beschrieben ist, können auf umgekehrtem Wege Kontrollinformationen, Statusmeldungen, Debug-Werte und dergleichen vom "Target" zum PLC Provider des zuständigen Virtual Kubelets und von dort in ggf. bearbeiteter Form weiter zum Kubernetes Master oder zu einem alternativen Ziel geleitet werden. Solche alternativen Ziele können insbesondere Bedienund Beobachtungsgeräte (HMI; SCADA; MES) innerhalb oder außerhalb eines Automatisierungsnetzwerkes sein. Auch cloudbasierte Anwendungen können erreicht werden. Die Ziele können mittels des Kubernetes Master vorgegeben werden; alternativ kann der Kubernetes Master diese Daten auch weiterleiten, ggf. auch in veränderter Form.

Mit Hilfe der Erfindung können somit PLC-Programme mit den Mitteln von Container-Orchestrierungssystemen verwaltet und betrieben werden. Dabei ist auch ein Mischbetrieb von PLC-Programmen mit Software-Containern möglich.

Dadurch ist eine (teil-)automatisierte Zuweisung von PLC-Programmen zu Knoten, abhängig von Knotenkapazität, Systemlast, Erreichbarkeit, etc. (d.h. allgemein abhängig von Quality of Service Parametern) möglich. Das ermöglicht schnellere Inbetriebnahme- und Aktualisierungszeiten durch automatisiertes "Deployment" (Erstinstallation, Aktualisierung, Fehlerbehebung, Test, etc.) von PLC-Programmen bzw. - Programmteilen. Ein weiterer Vorteil ist die Erhöhung der Verfügbarkeit durch jetzt mögliche Ersatzschalteverfahren, d.h. Überwachung von PLC-Programmen, Neustart auf dem gleichen oder auf einem anderen Knoten. Nun ist auch eine einfache Einbindung in CI/CD-Systeme bzw. DevOps, d.h. automatisierte Kette von der Quellcodeänderung, Übersetzung, Test, Inbetriebnahme, möglich.

Der Einsatz eines Virtual Kubelet mit dem für industrielle Automatisierungsplattformen eingerichteten Provider-Plug-In erschließt das Kubernetes-"Ökosystem" für die Verwaltung von PLC-Programmen, z.B. mit bereits vorhandenen Werkzeugen zu Monitoring, Tracing, Rolloutstrategien, Versionierung, Rollback. Eine Verwaltung von PLC-Programmen ist somit mit etablierten Standardwerkzeugen aus dem Open-Source-Umfeld möglich, wo eine breite Kompetenzbasis gegeben ist und wobei die benutzten Software- Werkzeuge stetig weiterentwickelt werden. Eine einheitliche Softwareverwaltung in Mischsystemen (ITbasiert mit Containern und klassische PLC) bringt Vorteile durch eine einheitliche Infrastruktur und durch geringere Anforderungen an die zusätzliche Ausbildung von IT-Systemexperten. Außerdem können bestehende PLC-Systeme im Feld mit IT-Mechanismen ohne Änderung an den PLC-Systemen erschlossen werden.

## Patentansprüche

1. Verfahren zum Verwalten eines Automatisierungsprogramms für eine speicherprogrammierbare Steuerung,
wobei das Automatisierungsprogramm zu der speicherprogrammierbaren Steuerung übertragen und die Ausführung des Automatisierungsprogramms auf der speicherprogrammierbaren Steuerung kontrolliert wird,
**dadurch gekennzeichnet,**
**dass** in einem ersten Schritt das Automatisierungsprogramm oder eine Referenz zu diesem Automatisierungsprogramm von einem Kubernetes Master zu einem Virtual Kubelet übertragen wird,
**dass** in einem zweiten Schritt im Falle der Übertragung einer Referenz durch ein Provider-Interface des Virtual Kubelets das referenzierte Automatisierungsprogramm zu der speicherprogrammierbaren Steuerung übertragen wird, und
**dass** in einem dritten Schritt die Ausführung des übertragenen Automatisierungsprogramms auf der speicherprogrammierbaren Steuerung kontrolliert wird, wobei durch das Provider-Interface Steuerungsbefehle zu der speicherprogrammierbaren Steuerung übertragen und Quittierungsmeldungen der speicherprogrammierbaren Steuerung empfangen und verarbeitet oder zu einer Kontrollinstanz, insbesondere dem Kubernetes Master, weitergeleitet werden.

2. Verfahren nach Patentanspruch 1,
**dadurch gekennzeichnet,**
**dass** in dem ersten Schritt als die Referenz zu dem Automatisierungsprogramm eine Speicheradresse, insbesondere eine URL, eine Speicher-Pfadinformation, eine Spezifizierung zu dem Inhalt eines App-Stores oder eine andere Adresse, verwendet wird.

3. Verfahren nach einem der vorhergehenden Patentansprüche, **dadurch gekennzeichnet,**
**dass** in dem zweiten Schritt das an das Virtual Kubelet übertragene oder diesem als Referenz spezifizierte Automatisierungsprogramm vor der Übertragung an die speicherprogrammierbare Steuerung vorverarbeitet wird.

4. Verfahren nach Patentanspruch 3,
**dadurch gekennzeichnet,**
**dass** in dem zweiten Schritt das Automatisierungsprogramm vor der Übertragung kompiliert wird.

5. Verfahren nach einem der Patentansprüche 3 oder 4, **dadurch gekennzeichnet,**
**dass** in dem zweiten Schritt das zu übertragende Automatisierungsprogramm aus einer Mehrzahl referenzierter Quellen und/oder von dem Kubernetes Master übertragenen Programmteilen erstellt wird.

6. Verfahren nach einem der vorhergehenden Patentansprüche, **dadurch gekennzeichnet,**
**dass** in einer Anordnung mit einer Mehrzahl speicherprogrammierbare Steuerungen für jede einzelne der speicherprogrammierbare Steuerung oder für eine Gruppe typgleicher oder ähnlicher speicherprogrammierbare Steuerungen je ein eigenes Provider-Interface verwendet wird, wobei jedes der verwendeten Provider-Interfaces zur Anpassung des an die jeweilige speicherprogrammierbare Steuerung zu übertragenden Automatisierungsprogramms an den Typ und die speziellen Eigenschaften der jeweiligen Ziel-Steuerung durchführt.

7. Verfahren nach einem der vorhergehenden Patentansprüche, **dadurch gekennzeichnet,**
**dass** durch das Virtual Kubelet ein industrielles EngineeringSystem oder Teile davon als Provider-Interface verwendet werden, wobei das Engineering-System oder die Teile davon mittels von Kubernetes Master an das Virtual Kubelet übermittelter Anweisungen gesteuert wird.

8. Verfahren nach einem der vorhergehenden Patentansprüche, **dadurch gekennzeichnet,**
**dass** zur Verwaltung von Ressourcen der speicherprogrammierbaren Steuerung und/oder zur Zuweisung des Automatisierungsprogramms zu einer von mehreren Automatisierungsplattformen Custom Resource Definitions (CRD) in Kubernetes verwendet werden.

9. Verfahren nach einem der vorhergehenden Patentansprüche, **dadurch gekennzeichnet,**
**dass** ein auf das für die Verwendung von speicherprogrammierbaren Steuerungen angepasster Scheduler (Kubernetes Custom Scheduler) für die Verteilung des Automatisierungsprogramms auf die speicherprogrammierbaren Steuerungen verwendet wird.

10. Anordnung zum Verwalten eines Automatisierungsprogramms für eine speicherprogrammierbare Steuerung,
mit einem Kubernetes Master zur Übertragung des Automatisierungsprogramms oder einer Referenz zu dem Automatisierungsprogramm an ein Virtual Kubelet,
mit dem Virtual Kubelet zum Empfang des Automatisierungsprogramms oder der Referenz zu dem Automatisierungsprogramm und zum Empfang von Anweisungen für die Installation des Automatisierungsprogramms auf der speicherprogrammierbaren Steuerung und zur Kontrolle des Ablaufs des Automatisierungsprogramms auf der speicherprogrammierbaren Steuerung,
und mit einem Provider-Interface des Virtual Kubelet zur Übertragung des Automatisierungsprogramms zu der speicherprogrammierbaren Steuerung, zur Kontrolle des Programmablaufs des Automatisierungsprogramms und zur Entgegennahme und Weiterleitung von Quittierungsmeldungen der speicherprogrammierbaren Steuerung im Zuge des Ablaufs des Automatisierungsprogramms.

## Claims

1. Method for managing an automation program for a programmable logic controller,
wherein the automation program is transferred to the programmable logic controller and the execution of the automation program on the programmable logic controller is controlled,
**characterized**
**in that**, in a first step, the automation program or a reference to this automation program is transferred from a Kubernetes master to a virtual kubelet,
**in that**, in a second step, if a reference is transferred by means of a provider interface of the virtual kubelet, the referenced automation program is transferred to the programmable logic controller, and
**in that**, in a third step, the execution of the transferred automation program on the programmable logic controller is controlled, in which step, by means of the provider interface, control commands are transferred to the programmable logic controller and acknowledgement messages of the programmable logic controller are received and processed or forwarded to a control entity, in particular to the Kubernetes master.

2. Method according to Patent Claim 1,
**characterized**
**in that**, in the first step, a storage address, in particular a URL, storage path information, a specification relating to the contents of an app store, or another address, is used as the reference to the automation program.

3. Method according to any one of the previous patent claims, **characterized**
**in that**, in the second step, the automation program transferred to the virtual kubelet or specified to the latter as a reference is preprocessed before the transfer to the programmable logic controller.

4. Method according to Patent Claim 3,
**characterized**
**in that**, in the second step, the automation program is compiled before the transfer.

5. Method according to either of Patent Claims 3 or 4, **characterized**
**in that**, in the second step, the automation program to be transferred is created from a multiplicity of referenced sources and/or program parts transferred from the Kubernetes master.

6. Method according to any one of the previous patent claims, **characterized**
**in that**, in an assembly having a multiplicity of programmable logic controllers, a separate provider interface is used for each individual programmable logic controller or for a group of programmable logic controllers of the same or similar type, wherein each of the provider interfaces used carries out the customization of the automation program to be transferred to the respective programmable logic controller to the type and the specific properties of the respective target controller.

7. Method according to any one of the previous patent claims, **characterized**
**in that** the virtual kubelet uses an industrial engineering system or parts thereof as a provider interface, wherein the engineering system or the parts thereof is/are controlled by means of instructions transmitted from the Kubernetes master to the virtual kubelet.

8. Method according to any one of the previous patent claims, **characterized**
**in that**, to manage resources of the programmable logic controller and/or to assign the automation program to one of a plurality of automation platforms, custom resource definitions (CRD) in Kubernetes are used.

9. Method according to any one of the previous patent claims, **characterized**
**in that** a scheduler (Kubernetes Custom Scheduler) customized to the use of programmable logic controllers is used for the deployment of the automation program on the programmable logic controllers.

10. Assembly for managing an automation program for a programmable logic controller,
having a Kubernetes master for transferring the automation program or a reference to the automation program to a virtual kubelet,
having the virtual kubelet for receiving the automation program or the reference to the automation program and for receiving instructions for installing the automation program on the programmable logic controller and for controlling the execution of the automation program on the programmable logic controller,
and having a provider interface of the virtual kubelet for transferring the automation program to the programmable logic controller, for controlling the program execution of the automation program, and for receiving and forwarding acknowledgment messages of the programmable logic controller during the execution of the automation program.

## Revendications

1. Procédé de gestion d'un programme d'automatisation d'un automate programmable,
dans lequel on transmet le programme d'automatisation à l'automate programmable et on contrôle l'exécution du programme d'automatisation sur l'automate programmable,
**caractérisé**
**en ce que**, dans un premier stade, on transmet le programme d'automatisation ou une référence à ce programme d'automatisation d'un kubernetes master à un kubelet virtuel,
**en ce que**, dans un deuxième stade, dans le cas de la transmission d'une référence par une interface provider du kubelet virtuel, on transmet le programme d'automatisation référencé à l'automate programmable, et
**en ce que**, dans un troisième stade, on contrôle la réalisation du programme d'automatisation transmis sur l'automate programmable, dans lequel par l'interface provider, on transmet des instructions de commande à l'automate programmable et on reçoit et on traite des messages d'accusé de réception de l'automate programmable ou on les achemine à une instance de contrôle, notamment au kubernetes master.

2. Procédé suivant la revendication 1,
**caractérisé**
**en ce que**, dans le premier stade, on utilise comme la référence au programme d'automatisation, une adresse de mémoire, notamment une URL, une information de chemin de mémoire, une spécification sur le contenu d'un app-store ou une autre adresse.

3. Procédé suivant l'une des revendications précédentes, **caractérisé**
**en ce que**, dans le deuxième stade, on prétraite avant la transmission à l'automate programmable, le programme d'automatisation transmis au kubelet virtuel ou spécifié comme référence à celui-ci.

4. Procédé suivant la revendication 3,
**caractérisé**
**en ce que**, dans le deuxième stade, on compile le programme d'automatisation avant la transmission.

5. Procédé suivant l'une des revendications 3 ou 4,
**caractérisé**
**en ce que**, dans le deuxième stade, on établit le programme d'automatisation à transmettre, à partir d'une pluralité de sources référencées et/ou de parties de programme transmises par le kubernetes master.

6. Procédé suivant l'une des revendications précédentes,
**caractérisé**
**en ce que**, dans un agencement ayant une pluralité d'automates programmables, on utilise, pour chacun individuel des automates programmables ou pour un groupe de même type ou pour des automates programmables semblables, respectivement une propre interface provider, dans lequel chacune des interfaces provider utilisées s'effectue pour l'adaptation du programme d'automatisation, à transmettre à l'automate programmable respectif, aux types et aux propriétés spéciales de la commande cible respective.

7. Procédé suivant l'une des revendications précédentes, **caractérisé**
**en ce que** l'on utilise, par le kubelet virtuel, un système d'ingénierie industrielle ou des parties de celui-ci comme interface provider, dans lequel on commande le système d'ingénierie ou des parties de celui-ci au moyen d'instructions transmises du kubernetes master au kubelet virtuel.

8. Procédé suivant l'une des revendications précédentes, **caractérisé**
**en ce que**, pour la gestion de ressources de l'automate programmable et/ou pour l'attribution du programme d'automatisation à l'une de plusieurs plateformes d'automatisation, on utilise des custom resource definitions (CRD) dans des kubernets.

9. Procédé suivant l'une des revendications précédentes, **caractérisé**
**en ce que** l'on utilise un scheduler (kubernetes custom scheduler) adapté à l'utilisation d'automates programmables pour la répartition du programme d'automatisation entre les automates programmables.

10. Agencement de gestion d'un programme d'automatisation d'un automate programmable,
comprenant un kubernetes master de transmission du programme d'automatisation ou d'une référence au programme d'automatisation à un kubelet virtuel,
comprenant le kubelet virtuel de réception du programme d'automatisation ou de la référence au programme d'automatisation et de réception d'instructions pour l'installation du programme d'automatisation sur l'automate programmable et de contrôle du déroulement du programme d'automatisation sur l'automate programmable,
et comprenant une interface provider du kubelet virtuel pour la transmission du programme d'automatisation à l'automate programmable, pour le contrôle du déroulement du programme d'automatisation et pour la réception et l'acheminement de messages d'accusé de réception de l'automate programmable au cours du déroulement du programme d'automatisation.
